(19) **Europäisches Patentamt**
**European Patent Office**
**Office européen des brevets**

(11) **EP 4 733 740 A1**

(12) **EUROPEAN PATENT APPLICATION**
published in accordance with Art. 153(4) EPC

(43) Date of publication:
**29.04.2026 Bulletin 2026/18**

(21) Application number: **24845106.4**

(22) Date of filing: **28.03.2024**

(51) International Patent Classification (IPC):
**G01N 3/24** (2006.01)   **G01N 17/00** (2006.01)

(52) Cooperative Patent Classification (CPC):
**G01N 3/24; G01N 17/00**

(86) International application number:
**PCT/JP2024/012927**

(87) International publication number:
**WO 2025/022721 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.07.2023  JP 2023121673**

(71) Applicant: **JFE Steel Corporation
Tokyo, 100-0011 (JP)**

(72) Inventors:
• **MATSUKI Yuichi
Tokyo 100-0011 (JP)**
• **NAKAGAWA Kinya
Tokyo 100-0011 (JP)**
• **SHINMIYA Toyohisa
Tokyo 100-0011 (JP)**

(74) Representative: **Hoffmann Eitle
Patent- und Rechtsanwälte PartmbB
Arabellastraße 30
81925 München (DE)**

(54) **METHOD FOR EVALUATING DELAYED FRACTURE CHARACTERISTIC OF METAL PLATE FOR PRESS MOLDING, METHOD FOR MANUFACTURING PRESS-MOLDED ARTICLE, AND PROGRAM**

(57)     It is an object of the present invention to evaluate delayed fracture characteristics of a sheared end surface considering a load loading condition in press forming. A delayed fracture characteristic evaluation method for evaluating the delayed fracture characteristics of a sheared end surface of a metal sheet for press forming to be used for press processing includes: producing a plurality of test pieces having the sheared end surface by applying shearing processing under the same shearing condition to a metal sheet as a target; applying a test with a plurality of load stresses of loading stress under load loading conditions in which the stress distributions in the sheet thickness direction are the same or similar to the sheared end surfaces of the test pieces; carrying out the test under a plurality of load loading conditions in which the stress distributions in the sheet thickness direction are different from each other; and determining a limit stress, the limit stress being a limit value of a load stress at which a delayed fracture does not occur, according to the stress distribution in the sheet thickness direction based on the test for each load loading condition.

FIG. 1

FIRST STEP — S10
SHEARING STEP

SECOND STEP — S20
SELECT LOAD LOADING CONDITION

THIRD STEP — S30
LOAD EXTERNAL STRESS

FOURTH STEP — S40
PLACE IN HYDROGEN ENTRY ENVIRONMENT

FIFTH STEP — S50
ASSESS

EP 4 733 740 A1

## Description

Technical Field

The present invention relates to a technology of evaluating delayed fracture characteristics in a sheared end surface of a metal sheet for press forming. The present invention also relates to a method for manufacturing a press formed article and a program utilizing the evaluation technology. The present invention is a technology suitable for a metal sheet for press forming containing a high-strength steel sheet. In this specification, the high-strength steel sheet refers to a steel sheet having a tensile strength of 980 MPa or more.

Background Art

At present, automobiles have been required to improve fuel consumption by a reduction in weight and collision safety. For the purpose of achieving both the reduction in weight of a vehicle body and the protection of passengers in the event of a collision, the high-strength steel sheet tends to be used for structural components of the vehicle body. Particularly in recent years, ultrahigh-strength steel sheets having a tensile strength of 1470 MPa or more have begun to be applied to the vehicle body. One of the problems when the high-strength steel sheet is applied to the vehicle body is a delayed fracture occurring after press forming. Particularly in the high-strength steel sheets having a tensile strength of 980 MPa or more, the delayed fracture occurring from a sheared end surface after shearing processing is a significant problem. The end surface after shearing processing is also referred to as a sheared end surface.

Herein, it is known that a large tensile stress remains in the sheared end surface. This raises a concern about the occurrence of the delayed fracture in the sheared end surface. The delayed fracture of the sheared end surface is known to be further promoted by loading an external stress to the sheared end surface.

Conventionally, the methods described in PTLS 1 to 3 have been proposed as a method for evaluating the delayed fracture. More specifically, PTLS 1 and 2 describe the test methods of loading stress by constant displacement constraint by bending deformation. PTL 3 descries a test of performing stress loading by constant load loading by uniaxial tensile deformation.

Citation List

Patent Literatures

PTL 1: JP 2017-142086 A
PTL 2: JP 2014-70927 A
PTL 3: JP 2016-57163 A

Summary of Invention

Technical Problem

As described above, there has conventionally been a concern about the delayed fracture after press forming occurring from the sheared end surface of the high-strength steel sheet.

The present inventors have extensively studied the delayed fracture occurring from the sheared end surface after press forming. As a result, it has been found that, even when the same stress load is loaded to the sheared end surface, a limit stress at which the delayed fracture does not occur in the sheared end surface is sometimes different when a load loading condition is different. For example, when a case of uniaxial tensile deformation and a case of bending deformation are compared, the limit stresses at which the delayed fracture does not occur in the sheared end surface are sometimes different. Specifically, it has been found that the limit stress is sometimes lower in the case of uniaxial tensile deformation than in the case of bending deformation.

Therefore, the evaluation accuracy of the delayed fracture has been sometimes poor in the conventional evaluation methods.

The present invention has been made focusing on the above-described point. It is an object of the present invention to evaluate the delayed fracture characteristics of the sheared end surface considering the load loading condition in press forming.

Solution to Problem

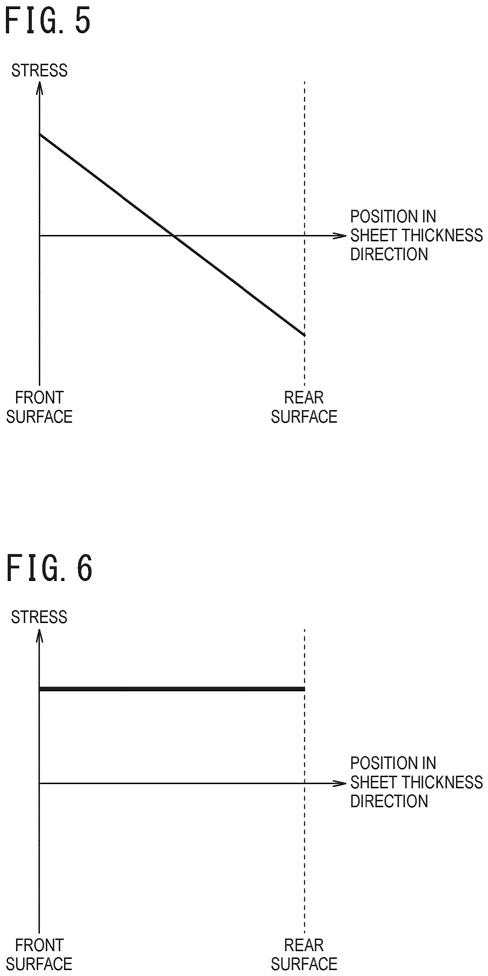

The present inventors have extensively studied the possibility that the limit stress at which the delayed fracture does not occur is different between the uniaxial tensile deformation and the bending deformation. As a result, the following finding has been obtained. In the bending deformation, a stress gradient is present in the sheet thickness direction as compared with the uniaxial tensile deformation (see FIGS. 5, 6). Therefore, the present inventors have obtained the finding that the crack propagation of the delayed fracture is suppressed in the bending deformation. To this finding, conventional techniques have not made it possible to perform delayed fracture evaluation considering a stress distribution in the sheet thickness direction of the sheared end surface.

Then, the present inventors have obtained the following finding in actual automobile components after press forming. More specifically, the present inventors have obtained the finding that, to predict the delayed fracture of the sheared end surface, the limit stress of the delayed fracture is required to be set considering the stress distribution in the sheet thickness direction.

Thus, the present inventors have considered evaluating the limit stress of the delayed fracture considering the stress distribution in the sheet thickness direction generated by an external load. Specifically, the present inventors have assumed a residual stress in the sheet width direction introduced into the sheared end surface. Then, the present inventors have considered the next processing in a delayed fracture test under a stress loading condition by bending or uniaxial tension. More specifically, the present inventors have considered that the limit stress of the delayed fracture according to the sheet thickness distribution of the stress load is measured by the test, and the sheet thickness distribution of the stress load is converted into numerical values. It should be noted that "under the stress loading condition" is synonymous with "under the load loading condition".

For the calculation of the limit stress of the delayed fracture according to the sheet thickness distribution of the stress load, the calculated value of a residual stress distribution by shearing in the sheet thickness direction may be referred to. The calculated value is obtained by X-ray residual stress measurement or CAE analysis, for example.

The limit stress of the delayed fracture thus obtained is compared with the sheet thickness distribution of the stress load under a specific load loading condition. The comparison makes it possible to predict the presence or absence of the occurrence of the delayed fracture under the load loading condition.

The load loading condition refers to a method for applying load loading, such as bending (deformation) or short-axis tension (deformation) to be applied to a sheet, for example. In general, deformation occurs in a sheet by loading, such as bending. However, a clear deformation does not have to occur by the application of load loading.

The present invention has been made based on the above-described idea.

More specifically, to solve the problem, one aspect of the present invention is a delayed fracture characteristic evaluation method for evaluating the delayed fracture characteristics of a sheared end surface of a metal sheet for press forming to be used for press processing, including: producing a plurality of test pieces having the sheared end surface by applying shearing processing under the same shearing condition to a metal sheet as a target; applying a test with a plurality of load stresses of loading stress under load loading conditions in which stress distributions in the sheet thickness direction are the same or similar to the sheared end surfaces of the test pieces; carrying out the test under a plurality of load loading conditions in which the stress distributions in the sheet thickness direction are different from each other; and determining a limit stress, the limit stress being a limit value of a load stress at which a delayed fracture does not occur, according to the stress distribution in the sheet thickness direction based on the test for each load loading condition.

Advantageous Effects of Invention

The aspect of the present invention makes it possible to evaluate the limit stress of the delayed fracture considering the stress distribution in the sheet thickness direction by an external load for a metal sheet for press forming. The aspect of the present invention can be used in manufacturing a press formed article using the evaluated metal sheet for press forming. The aspect of the present invention makes it possible to evaluate the delayed fracture characteristics in the sheared end surface of a sheet in advance in the manufacturing. Therefore, the aspect of the present invention makes it possible to select a press formed shape and a metal sheet having effective delayed fracture characteristics and manufacture a press formed article.

Therefore, the aspect of the present invention can improve the delayed fracture characteristics when the high-strength steel sheet is applied to various components, such as automobile panel components and structural and skeletal components.

Brief Description of Drawings

FIG. 1 is a view illustrating an example of an evaluation processing flow according to an embodiment based on the present invention;

FIGS. 2A to 2C are schematic views illustrating shearing processing;

FIGS. 3A and 3B are schematic views of a shape on the shear droop side of a sheared end surface, in which FIG. 3A is a cross-sectional view and FIG. 3B is a plan view;

FIG. 4 is a schematic view illustrating a residual stress distribution in the extension direction in a typical sheared end surface;

FIG. 5 is a schematic view of a stress distribution in the sheet thickness direction by bending deformation;

FIG. 6 is a schematic view of a stress distribution in the sheet thickness direction by uniaxial tensile deformation;

FIG. 7 is a schematic view of an added stress in bending deformation (case where a sheared surface side is the outside of bending);

FIG. 8 is a schematic view of an added stress in bending deformation (case where a fractured surface side is the outside of bending);

FIG. 9 is a schematic view of an added stress in uniaxial tensile deformation;

FIG. 10 is a view illustrating a configuration example of a program;

FIG. 11 is a view illustrating the relation between a residual stress in the extension direction of a sheared end surface and the distance from the sheared surface;

FIG. 12 is a view illustrating the relation between a load stress and the distance from the sheared surface-side front surface;

FIG. 13 is a view illustrating the relation between an added stress and the distance from the sheared surface-side front surface;

FIG. 14 is a view illustrating the relation between a limit stress and a stress gradient degree $\tau$; and

FIG. 15 is a view illustrating a press formed article shape defined in Examples.

Description of Embodiments

Embodiments based on the present invention will now be described with reference to the drawings.

(Method for evaluating delayed fracture characteristics)

This embodiment is an evaluation method for a metal sheet for press forming to be used for press processing. Specifically, this embodiment is a delayed fracture characteristic evaluation method for evaluating the delayed fracture characteristics of a sheared end surface of the metal sheet. This embodiment further exhibits the effects particularly when the metal sheet is a high-strength steel sheet.

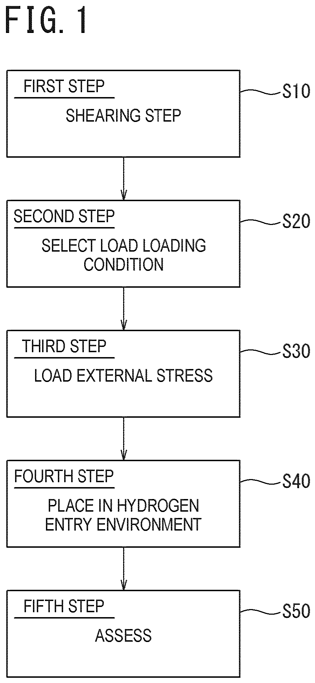

This embodiment includes a test step of performing an actual test and an evaluation step as processing of evaluating the delayed fracture characteristics for a metal sheet to be evaluated. Specifically, the method for evaluating delayed fracture characteristics of this embodiment includes a first step S10, a second step S20, a third step S30, a fourth step S40, and a fifth step S50 as illustrated in FIG. 1. The first step S10 to the fourth step S40 correspond to the test step. The fifth step S50 corresponds to the evaluation step.

<First step S10>

The first step S10 is a step of applying shearing processing under a set shearing condition to a metal sheet to be evaluated. Thus, in the first step S10, a test piece having a sheared end surface to be evaluated is produced.

The shearing condition is a processing condition in the shearing processing. The shearing condition is a value of the clearance between an upper blade and a lower blade, for example.

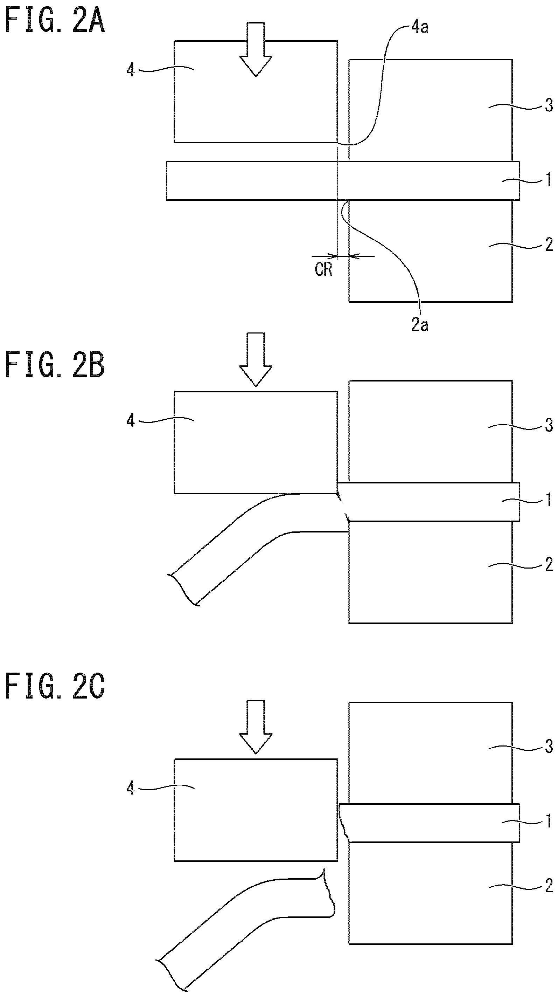

FIGS. 2A to 2C are schematic views of the shearing processing. In the shearing processing, a metal sheet 1 is first held between the lower blade 2 and a sheet holder 3 on the shear droop side as illustrated in FIGS. 2A to 2C. This constrains the metal sheet 1. In the constraint state, the upper blade 4 is moved vertically relative to the sheet. This gives shear deformation to the metal sheet 1. When the metal sheet is sufficiently deformed by the shear deformation, cracks are generated in the metal sheet 1 from the position where a tip 4a of the upper blade 4 and a tip 2a of the lower blade 2 contact each other. Then, the cracks meet to separate the metal sheet. As a result, the shearing processing is completed. The movement direction of the upper blade 4 is the shearing direction. The reference sign CR indicates the clearance.

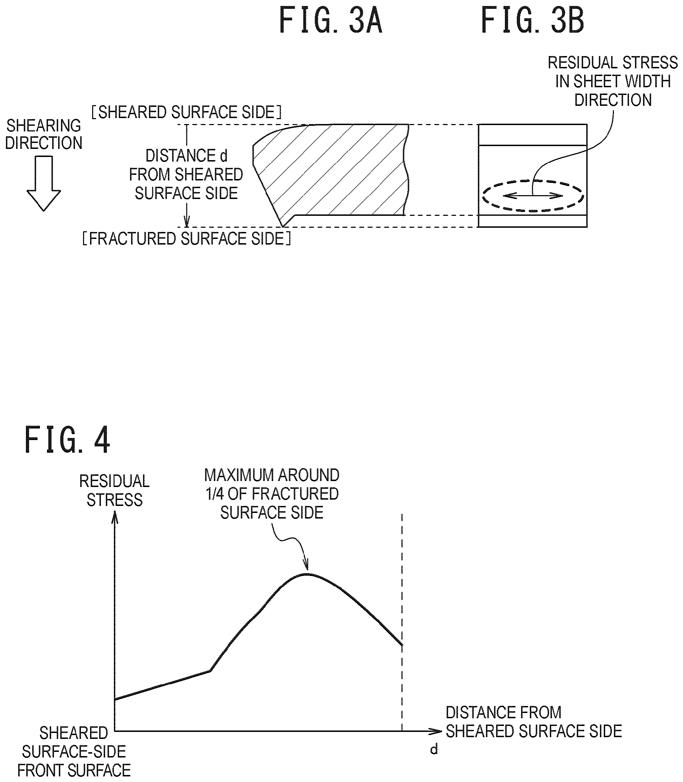

FIG. 3 is a schematic view of the shape on the shear droop side of the sheared end surface. FIG. 4 illustrates a residual stress distribution in the extension direction in a typical sheared end surface in the sheet thickness direction. Herein, the region indicated by the sheared end surface is the region within 1 mm deep from the front surface of the end surface produced by the shearing. The region indicated by the sheared end surface is the region where strain and a residual stress by the shearing are present.

In the sheared end surface, there are two regions of the region on the sheared surface side and the region on the fractured surface side in the sheet thickness direction on the shear droop side. The sheared surface side is the side that is rubbed by the upper blade to become a smooth end surface. The fractured surface side is the side that becomes a relatively rough end surface separated by the crack propagation from the tip of the upper blade and the tip of the lower blade.

In usual, the fractured surface side where the crack has propagated has a residual stress higher than that of the sheared surface side. As illustrated in FIG. 4, there is a point where the cracks from the tip of the upper blade and the tip of the lower blade meet. This point is an approximately 1/4 position of the fractured surface side of the sheet thickness from the lower blade side, for example. This point is a point where a material is finally separated. Therefore, this point is subjected to the strongest plastic deformation, and therefore the highest tensile stress remains at this point (see FIG. 4).

As described above, in the first step S10, a plurality of test pieces having the same sheared surface sheared under the same shearing processing condition is produced.

<Second step S20>

The second step S20 is a method for applying an external load to the sheared end surface of the test piece. More specifically, the second step S20 is a step of selecting a load loading condition. In this example, load loading conditions are load loading methods in which stress distributions are the same or similar in the sheet thickness direction of the sheared end surface.

A load loading mode to the sheared end surface includes the following modes, for example. The mode includes bending deformation, uniaxial tensile deformation, and tensile bending deformation in which elements of bending and uniaxial tension are combined. Depending on the orientation of the bending deformation, a stress distribution in the sheet thickness direction to be applied is different.

In this example, a case where a basic load loading condition is selected from the following three deformations of a first deformation, a second bending deformation, and a uniaxial tensile deformation is described as an example. A first bending deformation is a deformation of performing bending such that a mountain (tension side) is formed on the sheared surface side. The second bending deformation is a deformation of performing bending such that a mountain (tension side) is formed on the fractured surface side. In both the load loading conditions, a stress distribution is such that the stress distribution in the sheet thickness direction linearly changes along the sheet thickness direction as described below (see FIGS. 5, 6).

<Third step S30>

The third step S30 is a step of loading a preset external load stress under the load loading condition selected in the second step S20 to the sheared end surface of the test piece. The third step S30 is a step of constraining the test piece under the loaded state.

When the first bending deformation or the second bending deformation is selected as the load loading condition, a method of loading stress to the test piece having a sheared end surface by four-point bending can be exemplified. When tensile stress loading by uniaxial tension is selected as the load loading condition, a method of gripping both end portions of the test piece with a chuck and performing tensile deformation of the test piece can be exemplified. A manner for giving bending deformation or uniaxial tensile deformation may be carried out by conventionally known methods.

The stress adjustment is desirably carried out after a load stress value is confirmed. The confirmation of the load stress value is performed by a strain gauge attached to the test piece in advance, for example.

In addition, a plurality of test pieces is prepared by changing the load stress in a sufficiently small span, such as an increment of 100 MPa, for example. More specifically, a plurality of test pieces different in the load stress is prepared.

<Fourth step S40>

In the third step S30, an external load stress is loaded to each test piece and the test piece is constrained in that state.

In the fourth step S40, each test piece in the constraint state is placed in a predetermined hydrogen entry environment for a predetermined time. Then, in the fourth step S40, the generation situation of cracks is evaluated in the test pieces in that state.

At this time, the hydrogen entry environment and the placement time are preferably set to conditions where the hydrogen entry amount equivalent to the amount of hydrogen estimated to enter in an environment, in which a material to be evaluated is actually used, is obtained.

The placement of the test piece in the hydrogen entry environment is performed by immersing the test piece in a bath containing an acid solution, such as hydrochloric acid or an aqueous $NH_4SCN$ solution. The acid solution concentration and the immersion time are set such that hydrogen in an amount predetermined as the allowable upper limit enters the test piece. Then, the largest load stress of load stresses at which cracks equal to or larger than a predetermined level are not generated is defined as a limit stress according to the stress distribution in the sheet thickness direction corresponding to the heavy load condition.

Then, for the test pieces produced in the first step S10, the processing of the third and fourth steps S30, S40 is carried out while the load loading condition selected in the second step S20 is being changed.

By the test above, the limit stress according to the stress distribution in the sheet thickness direction corresponding to each load loading condition can be determined. The limit stress is a limit value of the load stress at which the delayed fracture does not occur. Each limit stress can be set as a determination value to evaluate the limit of the load stress at which the delayed fracture does not occur for each stress distribution in the sheet thickness direction to be applied to the sheared end surface.

<Fifth step S50>

In the fifth step S50, a plurality of combined data is acquired. The combined data has the stress distribution in the sheet thickness direction corresponding to the load loading condition and the limit value of the load stress corresponding to the stress distribution.

The stress distribution in the sheet thickness direction may be converted into a function, for example. The stress distribution in the sheet thickness direction may be represented by the corresponding load loading condition, for example.

In this embodiment, the stress distribution in the sheet thickness direction corresponding to each load loading condition is converted into an index value indicating the stress distribution in the sheet thickness direction. The conversion is performed by a preset function, for example.

In this embodiment, the index value is represented by a stress gradient degree $\tau$ representing the gradient of the corresponding stress distribution in the sheet thickness direction, for example.

The stress gradient degree $\tau$ is determined by Equation (1) below, for example. The stress of the fractured surface-side front surface is set as $\sigma f$ and the stress of the sheared surface-side front surface is set as $\sigma b$. The stress gradient degree $\tau$ represented by Equation (1) is a nondimensional value. The stress gradient degree $\tau$ is determined using the stress distribution when the limit stress is loaded.

$$\tau = (\sigma f - \sigma b)/|MAX(\sigma f, \sigma b)| \cdots (1)$$

The stress distribution is determined as follows, for example. As a first method, the stress distribution is determined by X-ray residual stress measurement of the residual stress distribution by shearing in the sheet thickness direction. As a second method, the stress distribution is determined by a calculation result by CAE analysis under a condition where the limit stress is loaded under a target load loading condition.

The stress gradient degree $\tau$ that is the gradient degree of the distribution may be simply calculated by Equation (2) below.

$$\tau = \sigma f/\sigma b \cdots (2)$$

In the fifth step S50, correlation information between the index value and the corresponding limit value of the load stress is determined by referring to the plurality of combined data. The combined data contains data (index value, limit stress).

The correlation information may be obtained by a known arithmetic operation method. The correlation information is a multiple regression model, a model formula based on machine learning, or the like for example. The plurality of combined data may be adopted as the correlation information. The correlation information is represented by a function or a table, for example.

Thus, the correlation information is determined in advance. This makes it possible to predict whether the delayed fracture occurs in the sheared end surface when a metal sheet for press forming is subjected to press processing into an actual press formed article or the shape of a press formed article to be formed.

For example, it is considered that a target press formed article is manufactured by press forming from a metal sheet for press forming. The stress distribution in the sheet thickness direction and the residual stress by forming in the sheared end surface in the press formed article are evaluated referring to the correlation information determined above.

Herein, the stress distribution in the sheet thickness direction and the residual stress by forming can be calculated by forming analysis by common CAE. The stress distribution in the sheet thickness direction determined by the analysis is converted into an index value, for example. Then, it is determined whether the residual stress by forming exceeds the limit stress at the determined index value referring to the correlation information determined in advance. Based on the determination, it is evaluated whether the delayed fracture in the sheared end surface occurs.

As places to be evaluated, a plurality of places may be selected as representative values from the sheared end surface and evaluated.

The load loading condition under which an external stress is applied to various places of the sheared end surface by press forming and the residual stress by forming are determined, for example. Then, the limit stress of a condition close to the stress distribution in the sheet thickness direction approximating the determined load loading condition is set as the determination value. Then, it may be evaluated whether the delayed fracture occurs at the place based on the determination value.

As the condition of load loading to the sheared end surface in the actual press forming, not only simple bending and uniaxial tension but a complex load loading condition in which the simple bending and the uniaxial tension are superimposed is also assumed. For the complex load loading condition, combined data containing the stress distribution in the sheet thickness direction and the limit stress may be acquired.

In this case, for the complex load loading condition, the limit stress may also be determined by performing the above-described test. The limit stress may also be determined as follows. More specifically, pressure distributions at the limit stresses in the load loading conditions to be superimposed are superimposed. Then, the stress at the position where the stress is the largest in the sheet thickness direction when superimposed is set as the limit stress according to the stress distribution in the sheet thickness direction corresponding to the complex load loading condition.

Each step described above is carried out while the shearing processing condition is changed, and, for each shearing processing condition, the limit stress according to the stress distribution in the sheet thickness direction may be determined. Then, first, the limit stress according to the stress distribution in the sheet thickness direction corresponding to the shearing processing condition used for the metal sheet to be used and the correlation information are decided. Then, it may be evaluated whether the delayed fracture in the sheared end surface occurs using the information. It is a matter of course that, in the manufacture of mass-produced articles, shearing processing is carried out under the same shearing processing condition in many cases. Therefore, there is no problem when only information on the shearing processing condition is held.

(Operations and Others)

FIGS. 5 and 6 are examples of stress load distributions in the sheet thickness direction generated by a load stress assumed when stress is loaded to the sheared end surface. More specifically, FIGS. 5 and 6 are examples of typical stress load distributions in the sheet thickness direction to the extension direction of the sheared end surface generated by the external load.

When the load loading condition is stress loading by bending deformation, a stress is loaded which linearly changes from tension to compression from one sheet thickness front surface to the other sheet thickness front surface. Therefore, in the stress loading by bending deformation, the stress distribution in the sheet thickness direction as illustrated in FIG. 5 is obtained. Both the sheared surface side and the fractured surface side are assumed as the side where the stress becomes tension depending on the orientation of the bending deformation. The side where the stress is tension is a side that is bent to be convex.

When the load loading condition is stress loading by uniaxial tensile deformation, a uniform tensile stress is loaded over the entire sheet thickness. Therefore, in the stress loading by uniaxial tensile deformation, the stress distribution in the sheet thickness direction as illustrated in FIG. 6 is obtained.

A tensile bending-like state is also assumed in which the load loading condition contains a combination of elements of bending and uniaxial tension.

The stress distribution in the sheet thickness direction of the sheared end surface when stress is loaded to the sheared end surface is assumed to be one in which a distribution of stress loads by a load stress is superimposed over the residual stress distribution by shearing described above.

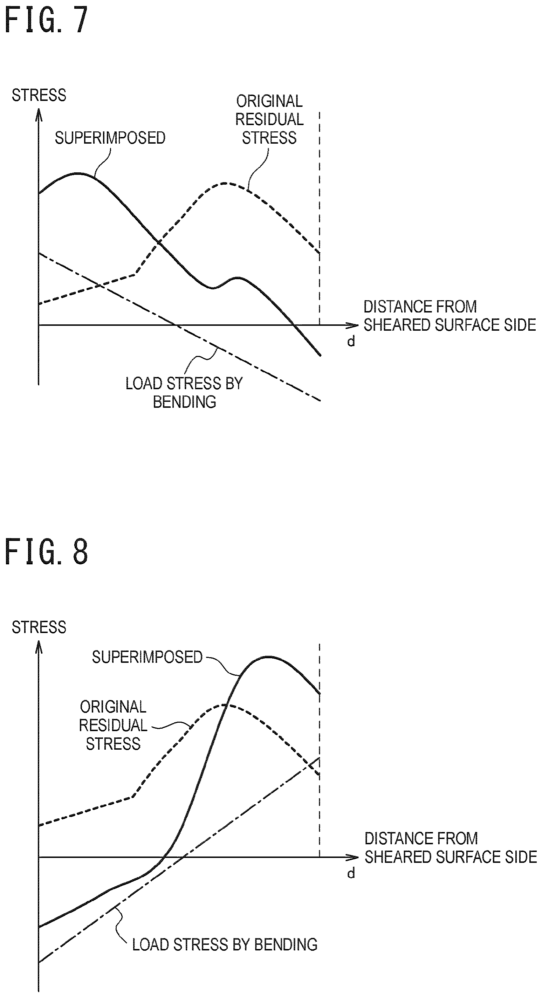

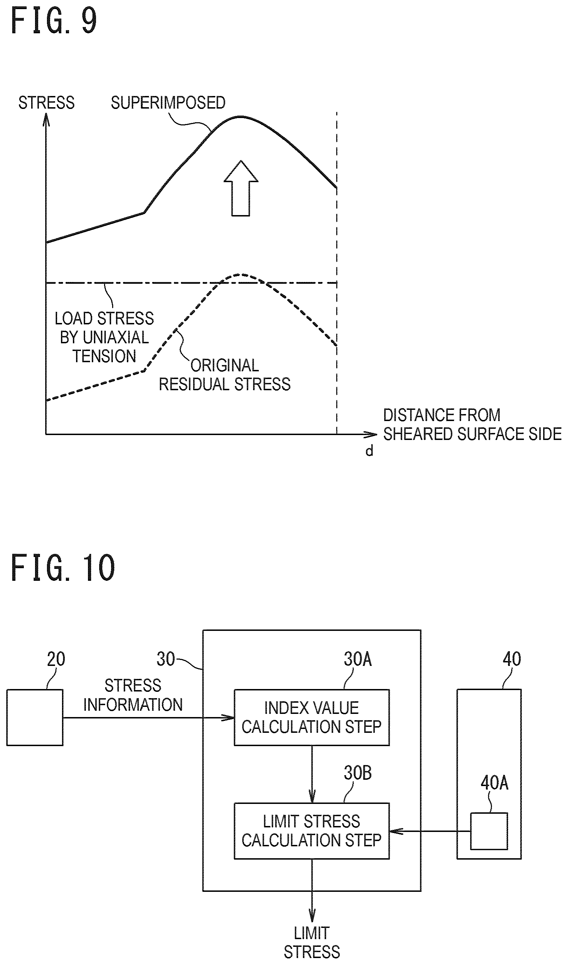

FIGS. 7 to 9 are schematic views in which the stress load distributions under various load loading conditions are superimposed over the residual stress distribution of the sheared end surface illustrated in FIG. 4. FIG. 7 is a schematic view when the load loading condition of bending deformation in which the sheared end surface side is the outside of the bending is selected. FIG. 8 is a schematic view when the load loading condition of bending deformation in which the fractured surface side is the outside of the bending is selected. FIG. 9 is a schematic view when the load loading condition of uniaxial tensile deformation is selected.

Even when the maximum values in the sheet thickness by external load stresses to be loaded to the sheared end surface are the same, the added stresses are different as illustrated in these schematic views (see FIGS. 7 to 9). More specifically, the total maximum tensile stresses of the sheared end surface are different. The total value is the total value obtained by adding the external load stress and the residual stress of the sheared end surface by shearing processing.

Specifically, the relation among the total maximum tensile stresses of the sheared end surface is as follows.

Uniaxial tension > Bending (fractured surface side tension) > Bending (sheared surface side tension)

In the case of tensile bending, uniaxial tension and bending are combined. Therefore, in the case of the tensile bending, the maximum tensile stress is assumed to be intermediate between both of them.

When the test piece is placed in the hydrogen entry environment in a state in which a stress load is given to the sheared end surface, cracks are generated with an increase in the hydrogen amount, and the delayed fracture occurs in some cases. This delayed fracture is known to be likely to occur as the stress in the sheared end surface is higher.

From the above, it is considered that there is a stress at the limit at which the delayed fracture occurs in the sheared end surface. Herein, it is supposed that the delayed fracture occurs when the maximum value of the sum obtained by superimposing the distributions of a shear residual stress and a load stress in the sheared end surface reaches the stress at the limit. Based on such a supposition, the maximum value of the stress load that can be taken in a range where the delayed fracture does not occur has the following relation depending on the load loading condition. The maximum value of the stress load that can be taken in a range when the delayed fracture does not occur is also simply referred to as the limit stress below.

Uniaxial tension < Bending (fractured surface side tension) < Bending (sheared surface side tension)

In the case of the tensile bending, uniaxial tension and bending are combined. Therefore, an intermediate state between both of them is assumed.

From the above, the delayed fracture characteristics of the sheared end surface in a metal sheet for press forming can be evaluated by determining the limit stress for each stress distribution in the sheet thickness direction. The limit stress is a limit value of the load stress at which the delayed fracture does not occur. For example, the limit stress according to the stress distribution in the sheet thickness direction corresponding to the load loading condition is determined for each of the plurality of stress distributions in the sheet thickness direction. Then, it is evaluated whether the delayed fracture occurs at the representative position of the sheared end surface when the metal sheet for press forming is press-formed.

Herein, as the evaluation, it is conceivable to design a stress to be loaded to the sheared end surface of a press formed article in a range where the load loading condition does not exceed the limit stress of uniaxial tension. However, this does not consider stress loading by bending. Therefore, this evaluation poses a problem of being excessively strict.

From the above, the present inventors have obtained the following findings to achieve more excellent evaluation of the delayed fracture of the sheared end surface.

(1) Due to the distribution of the shear residual stress of the sheared end surface, the load maximum stress (limit stress) of the delayed fracture limit changes. Further, depending on the distribution in the sheet thickness of the stress load, the load maximum stress (limit stress) of the delayed fracture limit changes. Therefore, it is required to give a plurality of load loadings such that different stress distributions are applied in the sheet thickness direction and evaluate each limit stress according to the stress distribution for each of the different stress distributions.

(2) As the conditions of load loading to the sheared end surface in the actual press forming, not only the simple bending and the uniaxial tension but the complex load loading condition in which the simple bending and the uniaxial tension are superimposed is also assumed. The evaluation accuracy is improved by also determining the limit stress according to the stress distribution corresponding to the complex load loading condition.

(3) The stress distribution in the sheet thickness direction is converted into an index value. In this case, the correlation between the stress distribution in the sheet thickness direction and the limit stress can be mathematically represented, for example. In this case, the correlation information can be more simply represented. As a result, the delayed fracture evaluation in the sheared end surface after press forming can be more simply carried out.

(4) When the load loading condition is stress loading by uniaxial tension, the delayed fracture limit stress is assumed to be the lowest. When the load loading condition is stress loading by bending, the delayed fracture limit stress is assumed to be lower when a tensile stress is loaded to the fractured surface side having a relatively high shear residual stress. Therefore, the index value can be set as a value representing the gradient of the stress in the sheet thickness direction based on the corresponding stress distribution in the sheet thickness direction.

For example, the stress of the fractured surface-side front surface is set as σf and the stress of the sheared surface-side front surface is set as σb. In this case, the stress gradient degree τ as the index value can be defined as Equation (1) or a mathematical equation similar thereto.

$$(\sigma f - \sigma b)/|MAX(\sigma f, \sigma b)| \cdots (1)$$

In this case, the limit stress of the delayed fracture can be accurately represented by varying the limit stress as a function in which the stress gradient degree τ is a variable.

EP 4 733 740 A1

In the above-described delayed fracture evaluation method, the analysis information of a press formed article calculated by CAE can be utilized to evaluate the occurrence of the delayed fracture. For example, a stress distribution σ(t) in the sheet thickness direction of the sheared end surface according to a position t in the sheet thickness direction in each place of the sheared end surface is acquired from the forming analysis of press forming by CAE. The acquired stress distribution σ(t) can be utilized to evaluate the occurrence of the delayed fracture.

The stress distribution σ(t) in the sheet thickness direction of the sheared end surface is represented by an index value. As a result, the determination of the limit stress is generalized, and the delayed fracture characteristics can be more simply evaluated.

Herein, the stress gradient degree τ as an example of the index value is not limited to Equation (1) above. For example, (σf/σb) may be set as the stress gradient degree τ representing the gradient of the stress in the sheet thickness direction.

The load loading condition itself may be set as an index representing the stress distribution σ(t) in the sheet thickness direction of the sheared end surface. Then, the presence or absence of the delayed fracture may be evaluated based on the limit stress of the load loading condition close to a load condition to be loaded in press forming to a place of the sheared end surface to be evaluated. For example, the stress distribution in the sheet thickness direction by external stress loading (press forming) in the place to be evaluated is determined by CAE analysis. Then, a load loading condition approximating the stress distribution is specified. Thereafter, it may be evaluated whether the delayed fracture occurs based on whether the limit stress under the specified load loading condition is exceeded.

However, the evaluation can be more simply performed when the stress distribution σ(t) in the sheet thickness direction of the sheared end surface is represented by the index value.

(Method for manufacturing press formed article)

A target press formed article is manufactured by press-forming a metal sheet for press forming having a sheared end surface.

At this time, for the metal sheet for press forming to be used, the correlation between the index value and the limit stress is determined in advance based on the method for evaluating delayed fracture characteristics of a metal sheet for press forming described above.

Then, CAE analysis of press-forming the metal sheet for press forming to form a press formed article is performed using a computer. Then, the presence or absence of the occurrence of the delayed fracture of the press formed article is evaluated based on the stress distributions in the sheet thickness direction in various places of the sheared end surface based on the analysis result and the correlation above. When it is evaluated that the delayed fracture occurs, the press formed shape of the press formed article is changed or the material or the sheet thickness of the metal sheet to be used is changed. Then, the delayed fracture is evaluated again. This is repeated until it is evaluated that the delayed fracture does not occur.

This makes it possible to manufacture a press formed article in which the delayed fracture does not occur.

(Program)

An example of a program to be used for the method for evaluating delayed fracture characteristics described above is given. As illustrated in FIG. 10, the program is stored in a storage unit 40, such as a RAM or an ROM, of a computer. The program is executed by a computer.

The program of this example determines information 40A on the correlation between the index value and the limit stress in advance and stores the information 40A in the storage unit 40. The index value is an index value representing the stress distribution in the sheet thickness direction by loading an external load to the metal sheet. The limit stress is a limit stress under the load loading condition under which the stress distribution in the sheet thickness direction is obtained. The correlation information 40A may be determined in advance by the processing of the method for evaluating delayed fracture characteristics described above. For example, it is supposed to calculate the index value by Equation (1).

In the program of this example, information on the stress distribution is input and the limit stress is output which is a limit value of the load stress at which the delayed fracture does not occur.

The information on the stress distribution to be input is a value determined by carrying out CAE analysis of forming a metal sheet into the target press formed article shape, and substituting the value obtained by the analysis into an expression for determining the index value. The reference numeral 20 in FIG. 10 denotes a CAE analysis unit.

A program 30 of this example is executed as follows. First, in an index value calculation step 30A, stress values of both end portions in the sheet thickness direction are substituted into Equation (1) from the input information on the stress distribution, and the index value to be evaluated is calculated.

Next, in a limit stress calculation step 30B, the limit stress corresponding to the calculated index value is determined referring to the correlation information 40A.

Then, the program 30 of this example outputs the determined limit stress value.

Herein, when the value of stress occurring in the evaluation place is also input together with the information on the stress distribution into the program, a configuration may be acceptable in which the limit stress determined above and the input stress value are compared, and information on whether the delayed fracture occurs is output.

(Others)

The present disclosure may also take the following configurations.

(1) A disclosure 1 is a delayed fracture characteristic evaluation method for evaluating the delayed fracture characteristics of a sheared end surface of a metal sheet for press forming to be used for press processing, including:

producing a plurality of test pieces having the sheared end surface by applying shearing processing under the same shearing condition to a metal sheet as a target;

applying a test with a plurality of load stresses of loading stress under load loading conditions in which stress distributions in the sheet thickness direction are the same or similar to the sheared end surfaces of the test pieces;

carrying out the test under a plurality of load loading conditions in which the stress distributions in the sheet thickness direction are different from each other; and

determining a limit stress, the limit stress being a limit value of a load stress at which a delayed fracture does not occur, according to the stress distribution in the sheet thickness direction based on the test for each load loading condition.

(2) In a disclosure 2, the test involves placing the stress-loaded test piece in a hydrogen entry environment, and setting the upper limit of the load stress at which the delayed fracture does not occur in the hydrogen entry environment as the limit stress.

(3) In a disclosure 3, the plurality of load loading conditions includes load loading by bending in a convex manner in the shearing direction, load loading by bending in a concave manner in the shearing direction, and stress loading by uniaxial tension.

(4) A disclosure 4 includes: determining the limit stress according to the stress distribution in the sheet thickness direction corresponding to a complex load loading condition, the complex load loading condition being obtained by superimposing two or more load loading conditions different in the stress distribution in the sheet thickness direction.

(5) In a disclosure 5, the metal sheet for press forming contains a high-strength steel sheet.

(6) A disclosure 6 includes: converting the stress distribution in the sheet thickness direction into an index value representing the distribution state of the stress distribution; and

determining the correlation between the index value and the limit stress from a plurality of data sets containing the index value and the limit stress.

(7) In a disclosure 7, the index value is a value representing the gradient of the stress distribution in the sheet thickness direction.

(8) In a disclosure 8, when a stress of the fractured surface-side front surface of a sheet is set as $\sigma f$ and a stress of the sheared surface-side front surface of the sheet is set as $\sigma b$ in the stress distribution, the index value $\tau$ is represented by Equation (1) below,

$$\tau = (\sigma f - \sigma b)/|MAX(\sigma f, \sigma b)| \cdots (1).$$

(9) A disclosure 9 is a method for manufacturing a press formed article for manufacturing a press formed article by press-forming a metal sheet for press forming having a sheared end surface, including:

determining the correlation between the index value and the limit stress in advance based on the method for evaluating delayed fracture characteristics of a metal sheet for press forming of the present disclosure for a metal sheet as a target;

performing CAE analysis of press-forming the metal sheet for press forming to form a press formed article using a computer;

evaluating the presence or absence of the occurrence of the delayed fracture of the press formed article by the stress distributions in the sheet thickness direction in various places of the sheared end surface based on the analysis result and the correlation; and

performing the evaluation by converting the stress distributions in the sheet thickness direction in the various place of the sheared end surface to index values.

(10) A disclosure 10 is a program causing a computer to execute:

a step of calculating the index value from input information on the stress distribution in the sheet thickness direction; and
a step of determining the limit stress, the limit stress being a limit value of a load stress at which the delayed fracture does not occur, based on information on the correlation between the index value and the limit stress determined based on the method for evaluating delayed fracture characteristics of a metal sheet for press forming of the present disclosure and the calculated index value,
the information on the correlation being stored in a storage unit.

EXAMPLES

Next, Examples based on this embodiment will be described.
In this example, a description is given taking a test material A, which is 1470 MPa (tensile strength) grade steel having a sheet thickness of 1.4 mm, as an example of the metal sheet for press forming. It is a matter of course that the present invention is not limited to such a test material A. The present invention is suitably applicable to metal materials including ultrahigh tensile strength materials having a tensile strength of 980 MPa or more in which the delayed fracture occurs in the sheared end surface.
In this example, the clearance in shearing processing was set to 12% of the sheet thickness as the shearing processing condition. Then, shearing processing was applied to the test material A under the shearing processing condition to produce a test piece. The test piece has a linear sheared end surface having a length of 500 mm.

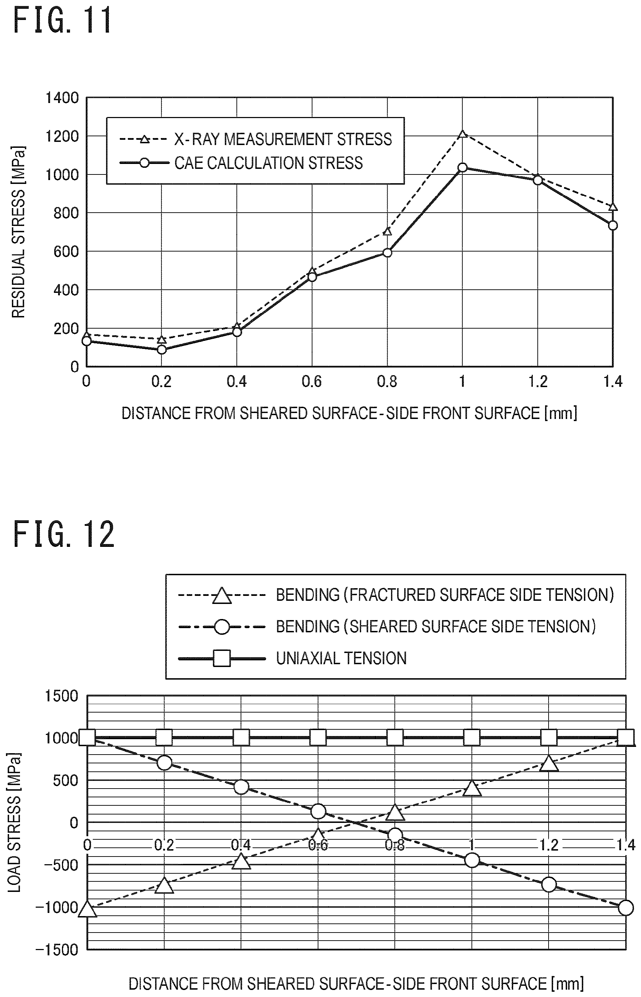

FIG. 11 illustrates the calculated values of stresses by an X-ray of stress distribution in the sheet thickness in a direction parallel to the sheared end surface of the sheared end surface of the test piece. FIG. 11 also illustrates the calculated values by FEM analysis of the shearing processing by CAE of the sheared end surface of the test piece.
As is understood from FIG. 11, the stress measurement by an X-ray and the CAE analysis result show the same tendency. Then, it has been found that the residual stress of the fractured surface side is generally higher than that of the sheared surface side in the sheared end surface. In particular, the test piece had the largest tensile residual stress at a 1/4 position of the sheet thickness of the fractured surface side.
Next, a stress load was given by bending loading by four-point bending to the sheared end surface of the test piece. Further, stress loading by uniaxial tension was given by grabbing and pulling the test piece in a strip shape with a chuck. More specifically, a case of bending deformation and a case of uniaxial tensile deformation are given as examples of the load loading condition. Then, an external stress was added to the plurality of test pieces for each load loading condition.
The stress to be loaded was adjusted as follows. A strain gauge is attached to the vicinity of the sheared end surface, and a strain is measured. Then, the measured strain amount was multiplied by the Young's modulus of 205 GPa, thereby measuring the maximum load stress in the sheet thickness under each condition. The external stress load to be loaded to each test piece was adjusted referring to the measurement. Then, a load stress was added in increments of 100 MPa by the adjustment, thereby producing a plurality of test pieces different in the load stress for each load loading condition. However, for the stress loading by the bending loading by four-point bending, the following two types of test piece were prepared. More specifically, test pieces were prepared in which an external load was loaded by two types of load loading conditions: a case where the sheared surface side was subjected to tension (convex) and a case where the fractured surface side was subjected to tension (convex). The tension (convex) refers to the fact that bending deformation is performed such that the tension side becomes convex.
FIG. 12 illustrates a schematic view of the estimated load stress distribution in the sheet thickness under each load loading condition. The example illustrated in FIG. 12 is an example when the maximum load stress is 1000 MPa.
Next, each test piece in the stress loaded state was immersed in a hydrochloric acid bath with a pH adjusted to be constant at 2.5 for 100 h. Then, the presence or absence of the generation of cracks penetrating in the sheet thickness direction at the end of the immersion is discriminated. Based on this discrimination, the occurrence situation of the delayed fracture was investigated. The maximum external stress at which the cracks were not generated, i.e., the delayed fracture did not occur, was defined as the limit stress.
The limit stress determined for each load loading condition is shown in Table 1.

[Table 1]

| Load loading condition | Limit stress [MPa] |
|---|---|
| Bending (Fractured surface side tension) | 800 |
| Bending (Sheared surface side tension) | 1500 |
| Uniaxial tension | 400 |

As is understood from Table 1, the limit stress is the lowest in the uniaxial tension. Next, the limit stress is high in the bending (fractured surface side tension), and is the highest in the bending (sheared surface side tension). The bending (fractured surface side tension) refers to a case where the fractured surface side is subjected to tension by bending deformation. The bending (sheared surface side tension) refers to a case where the sheared surface side is subjected to tension by bending deformation.

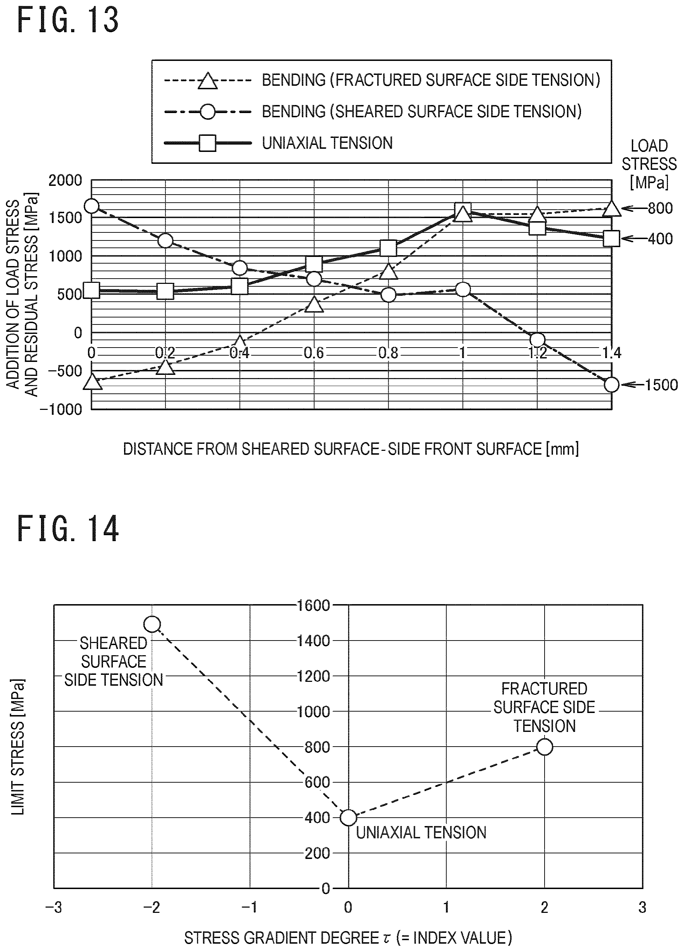

FIG. 13 illustrates that the load stress distributions of the uniaxial tension, the bending (fractured surface side tension), and the bending (sheared surface side tension) and the X-ray stress measurement distribution illustrated in FIG. 5 are superimposed. The limit stresses as the largest load stress in the sheet thickness under the load loading conditions are different. However, as illustrated in FIG. 13, when the shearing residual stress was added to the load stress, the following relation was established. More specifically, the bending (fractured surface side tension) was 1632 MPa on the outermost surface on the fractured surface side. The bending (sheared surface side tension) was 1665 MPa on the outermost surface on the sheared surface side. The uniaxial tension was 1613 MPa on the sheared surface side. More specifically, in all of the cases, the maximum stress was locally almost the same.

This shows that the followings are present due to the distribution in the sheet thickness of the residual stress by shearing. More specifically, it shows that there are maximum stresses of different delayed fracture limit loads according to the stress distribution $\sigma(t)$. The stress distribution $\sigma(t)$ is the stress distribution in the sheet thickness direction of the sheared end surface according to the position t in the sheet thickness direction in stress loading to the sheared end surface. It shows that the evaluation thereof is possible in the test above. Simply, it is considered to design a stress to be loaded to the sheared end surface of a press formed article in a range where the delayed fracture limit stress of the uniaxial tensile is not exceeded. However, this does not consider stress loading by bending. This poses a problem of being excessively strict.

The limit stress of the delayed fracture is the lowest in the loading by the uniaxial tension. Even when the bending loading is the same, the limit stresses are different between the sheared surface side tension and the fractured surface side tension. Therefore, the sheared surface side tension and the fractured surface side tension are required to be distinguished and described.

In this example, the stress gradient degree $\tau$ defined in (1) above is exemplified as the index value. In this case, the limit stress according to the stress distribution in the sheet thickness direction can be accurately represented by varying a limit stress $\sigma$lim as a function of the stress gradient degree $\tau$.

In FIG. 8, the stress gradient degree $\tau$ and three information of the limit stresses of the uniaxial tension, the bending (sheared surface side tension), and the bending (fractured surface side tension) are plotted from the results of Table 1. FIG. 8 illustrates linear interpolation of the state between the plots corresponding to the tensile bending state.

According to this technique, the limit stress $\sigma$lim is represented by the following equations.

$$\sigma\text{lim} = -550 \times \tau + 400 \ (\tau \leq 0)$$

$$\sigma\text{lim} = 200 \times \tau + 400 \ (\tau > 0)$$

Using the equations above, the dependence of the limit stress on the load stress distribution can be more accurately represented. A test may be separately performed for the tensile bending state and may be plotted in FIG. 14.

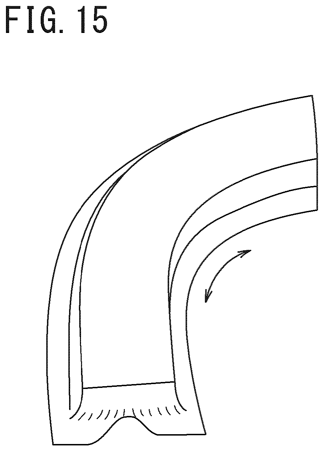

FIG. 15 is a schematic view of a press formed article having a sheared end surface in this example. Table 2 shows evaluation results in press-forming into the press formed article illustrated in FIG. 15.

Table 2 shows the largest load stress in the sheet thickness as the residual stress of the press forming in an exemplified place of the sheared end surface by CAE analysis, the stress gradient degree $\tau$, the limit stress dependent on $\tau$, and the delayed fracture test results.

[Table 2]

| | | | OK: No delayed fracture occurs. | |
| --- | --- | --- | --- | --- |
| | | | NG: Delayed fracture occurs. | |
| Component representative place | CAE forming residual stress [MPa] | Stress gradient degree $\tau$ | Limit stress (calculated from $\tau$) | Delayed fracture test result |
| A | 320 | -1.8 | 1390 | OK |
| B | 100 | 1.3 | 660 | OK |
| C | 630 | 0.8 | 560 | NG |
| D | 800 | -1.1 | 1005 | OK |
| E | 1400 | 1.8 | 760 | NG |

(continued)

| | | | OK: No delayed fracture occurs. | |
| | | | NG: Delayed fracture occurs. | |
| Component representative place | CAE forming residual stress [MPa] | Stress gradient degree $\tau$ | Limit stress (calculated from $\tau$) | Delayed fracture test result |
| --- | --- | --- | --- | --- |
| F | 850 | 0.3 | 460 | NG |
| G | 340 | -0.1 | 455 | OK |
| H | 750 | -0.8 | 840 | OK |
| I | 490 | 1.9 | 780 | OK |
| J | -700 | -1.3 | 1115 | OK |

As is understood from Table 2, it has been found that the accurate prediction of the delayed fracture can be achieved by evaluating the delayed fracture according to the stress distribution in the sheet thickness for the press formed article having a sheared end surface.

Further, Table 3 shows the results when a measure to reduce stress was taken for the places C, E, F where the delayed fracture occurred.

[Table 3]

| | | | OK: No delayed fracture occurs. | |
| | | | NG: Delayed fracture occurs. | |
| Component representative place | CAE forming residual stress [MPa] | Stress gradient degree $\tau$ | Limit stress (calculated from $\tau$) | Delayed fracture test result |
| --- | --- | --- | --- | --- |
| C | 410 | 0.8 | 560 | OK |
| E | -200 | 1.8 | 760 | OK |
| F | 120 | 0.3 | 460 | OK |

As is understood from Table 3, the delayed fracture was suppressed by reducing the stress at the delayed fracture occurrence position referring to the limit stress in which the stress gradient degree $\tau$ is set as the index. As described above, the production of the press formed article having a sheared end surface excellent in delayed fracture characteristics has been enabled.

Herein, the entire contents of JP 2023-121673 A (filed July 26, 2023), for which this application claims priority, form part of the present disclosure by reference. Herein, the description is given with reference to a limited number of embodiments, but the scope of the invention is not limited thereto and modifications of each embodiment based on the disclosure above are obvious to those skilled in the art.

Reference Signs List

1: metal sheet
2: lower blade
2a: tip
4: upper blade
4a: tip
30: program
30A: index value calculation step
30B: limit stress calculation step
40: storage unit
40A: correlation information
S10: first step
S20: second step

S30: third step
S40: fourth step
S50: fifth step
$\tau$: stress gradient degree (index value)

**Claims**

1. A method for evaluating delayed fracture characteristics of a metal sheet for press forming for evaluating delayed fracture characteristics of a sheared end surface of a metal sheet for press forming to be used for press processing, the method comprising:

   producing a plurality of test pieces having the sheared end surface by applying shearing processing under a same shearing condition to a metal sheet as a target;
   applying a test with a plurality of load stresses of loading stress under load loading conditions in which stress distributions in a sheet thickness direction are same or similar to the sheared end surfaces of the test pieces;
   carrying out the test under a plurality of load loading conditions in which the stress distributions in the sheet thickness direction are different from each other; and
   determining a limit stress, the limit stress being a limit value of a load stress at which a delayed fracture does not occur, according to the stress distribution in the sheet thickness direction based on the test for each load loading condition.

2. The method for evaluating delayed fracture characteristics of a metal sheet for press forming according to claim 1, wherein the test involves placing the stress-loaded test piece in a hydrogen entry environment, and setting an upper limit of the load stress at which the delayed fracture does not occur in the hydrogen entry environment as the limit stress.

3. The method for evaluating delayed fracture characteristics of a metal sheet for press forming according to claim 1 or 2, wherein the plurality of load loading conditions includes load loading by bending in a convex manner in a shearing direction, load loading by bending in a concave manner in the shearing direction, and stress loading by uniaxial tension.

4. The method for evaluating delayed fracture characteristics of a metal sheet for press forming according to any one of claims 1 to 3, comprising:

   determining the limit stress according to the stress distribution in the sheet thickness direction corresponding to a complex load loading condition,
   the complex load loading condition being obtained by superimposing two or more load loading conditions different in the stress distribution in the sheet thickness direction.

5. The method for evaluating delayed fracture characteristics of a metal sheet for press forming according to any one of claims 1 to 4, wherein the metal sheet for press forming contains a high-strength steel sheet.

6. The method for evaluating delayed fracture characteristics of a metal sheet for press forming according to any one of claims 1 to 5, comprising:

   converting the stress distribution in the sheet thickness direction into an index value representing a distribution state of the stress distribution; and
   determining a correlation between the index value and the limit stress from a plurality of data sets containing the index value and the limit stress.

7. The method for evaluating delayed fracture characteristics of a metal sheet for press forming according to claim 6, wherein the index value is a value representing the stress of the stress distribution in the sheet thickness direction.

8. The method for evaluating delayed fracture characteristics of a metal sheet for press forming according to claim 6 or 7, wherein
when a stress of a fractured surface-side front surface of a sheet is set as $\sigma f$ and a stress of a sheared surface-side front surface of the sheet is set as $\sigma b$ in the stress distribution, the index value $\tau$ is represented by Equation (1) below,

$$\tau = (\sigma f - \sigma b)/|MAX(\sigma f, \sigma b)| \cdots (1).$$

9.  A method for manufacturing a press formed article for manufacturing a press formed article by press-forming a metal sheet for press forming having a sheared end surface, the method comprising:

    determining the correlation between the index value and the limit stress in advance based on the method for evaluating delayed fracture characteristics of a metal sheet for press forming according to any one of claims 6 to 8 for a metal sheet as a target;
    performing CAE analysis of press-forming the metal sheet for press forming to form a press formed article using a computer;
    evaluating presence or absence of occurrence of the delayed fracture of the press formed article by the stress distributions in the sheet thickness direction in various places of the sheared end surface based on an analysis result and the correlation; and
    performing the evaluation by converting the stress distributions in the sheet thickness direction in the various places of the sheared end surface to index values.

10. A program causing a computer to execute:

    a step of calculating the index value from input information on the stress distribution in the sheet thickness direction; and
    a step of determining the limit stress, the limit stress being a limit value of a load stress at which the delayed fracture does not occur, based on information on the correlation between the index value and the limit stress determined based on the method for evaluating delayed fracture characteristics of a metal sheet for press forming according to any one of claims 6 to 8 and the calculated index value,
    the information on the correlation being stored in a storage unit.

# FIG. 1

```
┌─────────────────────────────┐
│  FIRST STEP                 │ ⟋ S10
│                             │
│       SHEARING STEP         │
└─────────────────────────────┘
              │
              ▼
┌─────────────────────────────┐
│  SECOND STEP                │ ⟋ S20
│                             │
│     SELECT LOAD LOADING     │
│         CONDITION           │
└─────────────────────────────┘
              │
              ▼
┌─────────────────────────────┐
│  THIRD STEP                 │ ⟋ S30
│                             │
│    LOAD EXTERNAL STRESS     │
└─────────────────────────────┘
              │
              ▼
┌─────────────────────────────┐
│  FOURTH STEP                │ ⟋ S40
│                             │
│     PLACE IN HYDROGEN       │
│     ENTRY ENVIRONMENT       │
└─────────────────────────────┘
              │
              ▼
┌─────────────────────────────┐
│  FIFTH STEP                 │ ⟋ S50
│                             │
│          ASSESS             │
└─────────────────────────────┘
```

## FIG. 2A

## FIG. 2B

## FIG. 2C

# FIG. 3A

# FIG. 3B

RESIDUAL STRESS
IN SHEET WIDTH
DIRECTION

[SHEARED SURFACE SIDE]

SHEARING
DIRECTION

DISTANCE d
FROM SHEARED
SURFACE SIDE

[FRACTURED SURFACE SIDE]

# FIG. 4

RESIDUAL
STRESS

MAXIMUM AROUND
1/4 OF FRACTURED
SURFACE SIDE

DISTANCE FROM
SHEARED SURFACE SIDE
d

SHEARED
SURFACE-SIDE
FRONT SURFACE

# FIG. 5

STRESS

POSITION IN
SHEET THICKNESS
DIRECTION

FRONT
SURFACE

REAR
SURFACE

# FIG. 6

STRESS

POSITION IN
SHEET THICKNESS
DIRECTION

FRONT
SURFACE

REAR
SURFACE

# FIG. 7

Graph axes: vertical axis labeled STRESS; horizontal axis labeled DISTANCE FROM SHEARED SURFACE SIDE, with variable d. Curves labeled SUPERIMPOSED, ORIGINAL RESIDUAL STRESS, and LOAD STRESS BY BENDING.

# FIG. 8

Graph axes: vertical axis labeled STRESS; horizontal axis labeled DISTANCE FROM SHEARED SURFACE SIDE, with variable d. Curves labeled SUPERIMPOSED, ORIGINAL RESIDUAL STRESS, and LOAD STRESS BY BENDING.

# FIG. 9

STRESS   SUPERIMPOSED

LOAD STRESS
BY UNIAXIAL
TENSION   ORIGINAL
RESIDUAL STRESS

DISTANCE FROM
SHEARED SURFACE SIDE

d

# FIG. 10

20   30   30A   40

STRESS
INFORMATION

INDEX VALUE
CALCULATION STEP

30B

LIMIT STRESS
CALCULATION STEP

40A

LIMIT
STRESS

# FIG. 11

# FIG. 12

# FIG. 13

Legend:
- ----△---- BENDING (FRACTURED SURFACE SIDE TENSION)
- ---○--- BENDING (SHEARED SURFACE SIDE TENSION)
- —□— UNIAXIAL TENSION

Y-axis: ADDITION OF LOAD STRESS AND RESIDUAL STRESS [MPa]

X-axis: DISTANCE FROM SHEARED SURFACE-SIDE FRONT SURFACE [mm]

LOAD STRESS [MPa]: ←800, ←400, ←1500

# FIG. 14

Y-axis: LIMIT STRESS [MPa]

X-axis: STRESS GRADIENT DEGREE $\tau$ (= INDEX VALUE)

Labels: SHEARED SURFACE SIDE TENSION, FRACTURED SURFACE SIDE TENSION, UNIAXIAL TENSION

FIG. 15

## INTERNATIONAL SEARCH REPORT

| International application No. |
| --- |
| **PCT/JP2024/012927** |

### A. CLASSIFICATION OF SUBJECT MATTER

*G01N 3/24*(2006.01)i; *G01N 17/00*(2006.01)i
FI: G01N3/24; G01N17/00

According to International Patent Classification (IPC) or to both national classification and IPC

### B. FIELDS SEARCHED

Minimum documentation searched (classification system followed by classification symbols)

G01N3/24; G01N17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2019/064922 A1 (JFE STEEL CORPORATION) 04 April 2019 (2019-04-04) entire text | 1-10 |
| A | JP 2023-072460 A (JFE STEEL CORPORATION) 24 May 2023 (2023-05-24) entire text | 1-10 |
| A | JP 2022-024814 A (JFE STEEL CORPORATION) 09 February 2022 (2022-02-09) entire text | 1-10 |

☐ Further documents are listed in the continuation of Box C.　　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 April 2024** | **07 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/012927**

| Patent document cited in search report | | | Publication date (day/month/year) | Patent family member(s) | | | Publication date (day/month/year) |
|---|---|---|---|---|---|---|---|
| WO | 2019/064922 | A1 | 04 April 2019 | US | 2020/0276658 | A1 | |
| | | | | entire text | | | |
| JP | 2023-072460 | A | 24 May 2023 | (Family: none) | | | |
| JP | 2022-024814 | A | 09 February 2022 | (Family: none) | | | |

Form PCT/ISA/210 (patent family annex) (July 2022)

**EP 4 733 740 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017142086 A
- JP 2014070927 A
- JP 2016057163 A
- JP 2023121673 A